# EUROPÄISCHE PATENTSCHRIFT

(11) **EP 2 999 090 B1**
(45) Veröffentlichungstag und Bekanntmachung des Hinweises auf die Patenterteilung: **30.08.2017**
(21) Anmeldenummer: 14185613.8
(22) Anmeldetag: 19.09.2014
(51) Int. Cl.: H02K 1/27, H02K 1/02, H02K 1/24

(54) **Permanenterregter Läufer mit geführtem Magnetfeld**
Permanently excited rotor with a guided magnetic field
Rotor excité en permanence présentant un champ magnétique guidé

(43) Veröffentlichungstag der Anmeldung: 23.03.2016
(73) Patentinhaber: Siemens Aktiengesellschaft, 80333 München (DE)
(72) Erfinder: Fischer, Ralf, 90419 Nürnberg (DE); Vollmer, Rolf, 36129 Gersfeld (DE)

(56) Entgegenhaltungen:
- EP-A1- 2 775 591
- DE-A1- 1 814 383
- GB-A- 2 506 683
- JP-A- H1 155 911
- US-A- 5 684 352
- US-A- 5 693 250
- US-A1- 2005 035 677

## Beschreibung

Die Erfindung betrifft einen permanentmagneterregten oder kurz permanenterregten Läufer für eine elektrische Maschine sowie eine elektrische Maschine mit einem solchen Läufer. Der Läufer weist sogenannte innenliegende Permanentmagneten auf, das heißt in einem Läuferkörper sind Magnettaschen ausgebildet, in denen jeweils ein Permanentmagnet angeordnet ist. Das Magnetfeld der Permanentmagneten muss durch den Läuferkörper hindurch zwischen den Magnettaschen einerseits und der Läuferoberfläche andererseits geführt werden, damit auf der Läuferoberfläche Magnetpole des Läufers ausgebildet werden, die mit einem Statorfeld eines Stators der elektrischen Maschine wechselwirken können.

Für permanentmagneterregte elektrische Maschinen gibt es einen Rotoraufbau, bei dem die Magnete im Inneren des Rotors angeordnet sind, was auch als IPM-Bauweise (IPM - Interior Permanent Magnet) bezeichnet wird. Dazu werden in Rotorblechpaketen Schlitze oder Magnettaschen vorgesehen, in welchen die Permanentmagnete angeordnet sind. Rotoren dieser Art sind mechanisch besonders robust, weil die innenliegenden Permanentmagneten gegen mechanische Einflüsse geschützt sind.

Bei einem Läufer mit innenliegenden Magnettaschen, also beispielsweise einem Rotor, ergibt sich das Problem, dass zum Führen des Magnetflusses zwischen der Läuferoberfläche und den innenliegenden Magnettaschen ein weichmagnetisches Material im Läuferkörper verwendet werden sollte. Durch ein solches weichmagnetisches Material kann sich aber auch ein magnetischer Kurzschluss innerhalb des Läuferkörpers ergeben, so dass die magnetische Erregung der Permanentmagneten nicht für den Antrieb des Läufers genutzt werden kann. Dieser magnetische Kurzschluss wird auch als Streuung bezeichnet.

Aus dem Stand der Technik ist hierzu bekannt, sogenannte Flusssperren im Läuferkörper vorzusehen. Diese Flusssperren können zwischen den innenliegenden Magnettaschen ausgebildet sein und beispielsweise luftgefüllte Hohlräume sein. Nachteilig hierbei ist, dass solche Hohlräume den Läuferkörper mechanisch destabilisieren.

Aus der UK 1 114 562 ist ein Rotor für eine Reluktanzmaschine bekannt, der keine eigene magnetische Erregung, dafür aber Flussführungspfade zwischen magnetischen Polen des Rotors aufweist. Zur Verbesserung der Flussführung ist der Rotor laminiert ausgestaltet, wodurch sich eine magnetische Anisotropie ergibt, deren Vorzugsrichtung oder leichte Achse in der Ebene der Laminierungsschichten und deren schwere Achse quer zur Erstreckungsrichtung der Laminierungsschichten verläuft. Anders als bei einem herkömmlichen Rotor mit geblechtem Rotorkörper verlaufen die Laminierungsschichten also nicht senkrecht zur Rotationsachse, sondern entlang oder parallel zur Rotationsachse des Rotors.

Aus der JP 4343281 B2 ist ein Reluktanzrotor bekannt, bei dem die Flussführungspfade nicht durch eine Laminierung des weichmagnetischen Rotorkörpers ausgebildet ist, sondern durch eine mikrokristalline Anisotropie des Eisenkörpers.

In dem Dokument US 5 684 352 A ist ein Rotor für eine elektrische Maschine beschrieben, der Permanentmagneten aufweist. Die Permanentmagneten sind in Magnettaschen im Inneren des Rotors angeordnet, wobei die Taschen in einem Läufermaterial angeordnet sind, das aus ferritischem rostlosem Stahl besteht. Die Permanentmagneten selbst sind aus anisotropem gesinterten Magnetmaterial gebildet. Um einen Streufluss zwischen den Permanentmagneten im Inneren des Rotors zu reduzieren, wird der ferritische Stahl des Rotors in Bereichen zwischen den Permanentmagneten erhitzt und hierdurch in dem Stahl eine austenitische Struktur geschaffen, die nichtmagnetisch ist.

In dem Dokument GB 2506683 A ist die Herstellung eines magnetisch anisotropen Materials mit einer Richtung der schweren Magnetisierbarkeit für eine elektrische Maschine beschrieben. Das magnetisch anisotrope Material kann zum Ausgestalten eines voll massiven Reluktanzrotors verwendet werden, der also keine luftgefüllten Hohlräume als Flusssperren benötigt. Zum Herstellen des magnetisch anisotropen Materials wird ein Pulver verwendet, das zu der Form des Rotors gesintert wird. Das magnetische anisotrope Material kann auch dazu verwendet werden, um bei einer permanentmagnet-erregten Synchronmaschine eine Drehzahl zu erhöhen, indem der magnetische Fluss eines Rotors geschwächt wird.

Aus dem Dokument US 2005/035677 A1 ist eine permanent-erregte Synchronmaschine bekannt, deren Permanentmagnete im Rotorinneren in Magnettaschen angeordnet sind und deren Rotormaterial magnetisch anisotropisch ausgestaltet ist, wobei eine leichte Achse der Anisotropie radial ausgerichtet ist.

Der Erfindung liegt die Aufgabe zugrunde, bei einem permanenterregten Läufer einer elektrischen Maschine einen magnetischen Kurzschluss des Magnetfeldes der Permanentmagneten innerhalb des Läuferkörpers zu vermindern.

Die Aufgabe wird durch die Gegenstände des unabhängigen Patentanspruchs 1 gelöst. Vorteilhafte Weiterbildungen der Erfindung ergeben sich durch die Merkmale der abhängigen Patentansprüche.

Bei dem erfindungsgemäßen Läufer handelt es sich um einen permanenterregten Läufer für eine elektrische Maschine. Die elektrische Maschine kann beispielsweise eine Linearmaschine oder eine Rotationsmaschine sein. In letzterem Fall ist der Läufer als Rotor ausgestaltet. Der erfindungsgemäße Läufer weist mehrere Permanentmagneten mit einer Magnetisierung zum Erzeugen eines permanenten Magnetfelds auf. Die Permanentmagneten sind in einem Läuferkörper angeordnet. Der Läuferkörper weist hierzu innenliegende Magnettaschen auf, in welchen jeweils einer der Permanentmagneten angeordnet ist. Unter Magnettaschen ist hier der aus dem Stand der Technik bekannte Begriff zu verstehen, der Schlitze oder Schächte im Inneren des Läuferkörpers bezeichnet. Der Läuferkörper ist dazu ausgelegt, das Magnetfeld zwischen den Magnettaschen und den Magnetpolen des Läufers an dessen Läuferoberfläche zu führen. Gemäß dem Stand der Technik kann der Läuferkörper hierzu aus einem weichmagnetischen Material ausgestaltet sein und die beschriebenen Flusssperren zwischen den Magnettaschen aufweisen.

Erfindungsgemäß ist dagegen zum Führen des Magnetfelds jede Magnettasche jeweils in einem Material ausgebildet, das zumindest bereichsweise oder vollständig eine magnetische Anisotropie mit einer leichten Achse und einer schweren Achse der Magnetisierbarkeit aufweist. Die leichte Achse wird auch als Vorzugsrichtung bezeichnet. Das Material kann auch mehr als eine leichte mit dem größten Wert der relativen Permeabilität und/oder mehr als eine schwere Achse mit dem kleinsten Wert der relativen Permeabilität aufweisen. Bevorzugt ist aber eine einzige leichte Achse vorgesehen, um ein Umspringen der Flussführung zu vermeiden. Die leichte Achse des Materials ist parallel zu einer Magnetisierungsrichtung der Magnetisierung des in der Magnettasche angeordneten Permanentmagneten ausgerichtet. Die parallele Ausrichtung muss dabei nicht perfekt sein. Zumindest ist die leichte Achse in einem Winkel von weniger als 25°, insbesondere weniger als 15° zu der Magnetisierungsrichtung der Magnetisierung des Permanentmagneten ausgerichtet. Die beschriebene Ausrichtung der leichten Achse ist insbesondere in einem an die Magnettasche angrenzenden Randbereich realisiert. Die Anisotropie des Materials ist insbesondere durch eine durch eine magnetokristalline Anisotropie bewirkt.

Durch die Erfindung ergibt sich der Vorteil, dass die Streuung des Magnetfelds der Permanentmagneten innerhalb des Läuferkörpers gering ist, so dass ein hoher Nutzfluss ermöglicht wird, also ein magnetischer Fluss, der durch die Magnetpole aus dem Läufer austritt (Nordpol) und eintritt (Südpol). Eine Streuung bedeutet ein Abweichen des magnetischen Flusses von der Magnetisierungsrichtung der Permanentmagneten innerhalb des Läuferkörpers. Sie wird durch die Ausrichtung der leichten Achse verringert.

Bei der Erfindung ist der Läuferkörper aus mehreren Segmenten gebildet. Bei jedem Segment ist die Ausrichtung der Achsen der Anisotropie separat von den übrigen Segmenten ausgebildet. Mit anderen Worten ist bei jedem Segment vor dem Zusammenbau des Läuferkörpers die Ausrichtung der Achsen der Anisotropie eingeprägt worden. Hierdurch ergibt sich der Vorteil, dass bei dem Läufer ein inhomogenes Anisotropiefeld ausgeprägt werden kann. Insbesondere bei einem Rotor kann die Ausrichtung der leichten Achse in einem radial innenliegenden Bereich unterschiedlich sein zu der Ausrichtung der leichten Achse in einem radial außenliegenden Bereich, also an der Läuferoberfläche.

Hierzu sieht die Erfindung vor, dass an einer Berührfläche zweier der Segmente die leichten Achsen der beiden Segmente parallel oder zumindest in einem Winkel von weniger als 25° zueinander angeordnet sind. Die leichten Achsen sind hier also bevorzugt tangential oder lateral ausgerichtet. Hierdurch kann im Inneren des Läufers der magnetische Kreis mit besonders geringem Verlust geschlossen werden.

Für den Fall, dass der Läufer als Rotor für eine Rotationsmaschine ausgestaltet ist, ergibt sich ein weiterer Vorteil, wenn bei jeder Magnettasche jeweils in einem an die Magnettasche angrenzenden Randbereich die leichte Achse in radialer Richtung ausgerichtet ist. Hierdurch können Pollücken zwischen den Magnetpolen bereitgestellt werden, die eine besonders geringe Induktivität aufweisen, so dass ein geringer magnetischer Spannungsabfall an der q-Induktivität (d.h. entlang der q-Achse) gegeben ist, was wiederum eine hohe Maximalleistung ermöglicht.

In einer Ausführungsform der Erfindung ist zwischen benachbarten Magnettaschen durchgängig das Material angeordnet. Mit anderen Worten ist im Falle eines Rotors entlang der Umfangsrichtung zwischen den Magnettaschen keine Flusssperre in Form eines Hohlraums ausgebildet, sondern durchgängig das anisotrope Material bereitgestellt, dessen leichte Achse beispielsweise radial ausgerichtet sein kann. Durch Verzicht auf Flusssperren in Form von Hohlräumen ergibt sich der Vorteil, dass der Läufer mechanisch besonders stabil ist.

Ein weiterer Vorteil bei dem Verzicht von Flusssperren ist die besonders dichte Anordnung von gegenpolig ausgerichteten Permanentmagneten. Entsprechend sieht die Erfindung Ausführungen des Läufers vor, bei denen eine Anzahl der Magnetpole vier oder sechs oder acht oder mehr als acht beträgt. Je größer die Anzahl der Magnetpole ist, desto größer kann die Antriebskraft, insbesondere das Drehmoment, sein.

Als besonders geeignet hat es sich erwiesen, wenn eine relative magnetische Permeabilität des Materials entlang der leichten Achse einen Wert größer als 15, insbesondere größer als 20, und entlang der schweren Achse einen Wert kleiner als zwei, insbesondere kleiner als 1,6 aufweist. Hier kann die feldführende Eigenschaft des Läuferkörpers einerseits mit der Unterdrückung des Streufeldes, das heißt des magnetischen Kurzschlusses, besonders gut kombiniert werden. Um die beschriebenen magnetischen Eigenschaften zu erhalten, sind als Parameter bei der Herstellung des Läufers die Legierung, der Temperprozess beim Ausgestalten des Läuferkörpers und/oder seiner Segmente sowie das Magnetfeld, mit welchem die Anisotropie eingeprägt wird, verfügbar. Einfache Versuche ermöglichen hier das Parametrieren des Herstellungsprozesses, um die beschriebenen Werte für die relative magnetische Permeabilität zu erhalten.

Besonders geeignet ist ein Material, welches eine magnetische Sättigung bei einer Flussdichte von mehr als 0,8 Tesla, insbesondere bei mindestens 1,0 Tesla aufweist. Hierdurch ergibt sich der Vorteil, dass das Statorfeld zum Antrieb des Läufers effizient genutzt werden kann.

Um sämtliche beschriebenen magnetischen Eigenschaften zu realisieren, sieht eine Ausführungsform der Erfindung vor, dass das Material Neodym-Eisen-Bor, NdFeB, aufweist. Dieses Material ist in Legierungen erhältlich, bei welchen die relative magnetische Permeabilität auf die beschriebenen Werte eingestellt werden kann und durch eine Koerzitivfeldstärke von weniger als zehn Kiloampere pro Meter die beschriebenen feldführenden Eigenschaften im Läuferkörper ausgebildet werden können. Das Material ist also kein Permanentmagnet, sondern weist flussführende Eigenschaften auf.

Zu der Erfindung gehört auch eine elektrische Maschine, die eine Ausführungsform des erfindungsgemäßen Läufers aufweist. Die Maschine weist des Weiteren einen Stator mit Magnetspulen zum Erzeugen eines magnetischen Statorfelds auf. Durch die magnetische Wechselwirkung des Statorfelds mit den Magnetpolen an der Läuferoberfläche ergibt sich in an sich bekannter Weise der dynamo-elektrische Effekt. Die elektrische Maschine kann auch als Generator ausgestaltet sein, bei welchem in den Magnetspulen eine Spannung induziert wird. Die erfindungsgemäße elektrische Maschine weist den Vorteil auf, dass sie besonders effizient betrieben werden kann, da der Streufluss im Läufer gering ist. Zudem ist eine hohe Regeldynamik ermöglicht, da die Verzögerungszeit beim Stromaufbau aufgrund der geringen Induktivität entlang der q-Achse, also im Bereich der Pollücken, gering ist.

Um eine Ausführungsform des erfindungsgemäßen Läufers bereitzustellen, wird wie folgt ein Verfahren zum Herstellen einer Ausführungsform des erfindungsgemäßen Läufers beschrieben. Das Verfahren umfasst die Schritte des Bereitstellens eines Läuferkörpers mit innenliegenden Magnettaschen und Anordnen jeweils eines Permanentmagneten in jeder der Magnettaschen.

Um das Magnetfeld der Permanentmagneten durch den Läuferkörper an dessen Läuferoberfläche zu führen, muss die beschriebene Anisotropie ausgebildet werden. Hierzu wird in einem Material des Läuferkörpers die magnetische Anisotropie derart bereitgestellt, dass bei jeder Magnettasche in einem jeweiligen daran angrenzenden Randbereich eine leichte Achse der Anisotropie parallel oder zumindest in einem Winkel von weniger als 25° zu einer Magnetisierungsrichtung der Magnetisierung des in der Magnettasche anzuordnenden Permanentmagneten ausgerichtet wird.

Zum Ausrichten der leichten Achse wird gemäß einer Ausführungsform des Verfahrens der Läuferkörper aus Segmenten gebildet. Jedes Segment wird dabei wiederum aus einem Rohling gebildet, der eine vorbestimmte magnetische Anisotropie aufweist. Mit anderen Worten wird also der Läuferkörper aus Bauteilen oder Segmenten zusammengesetzt, von denen jedes für sich eine der Lage des Segments im Läuferkörper entsprechend geeignete Ausrichtung der leichten Achse aufweist. Hierdurch ergibt sich der Vorteil, dass in jedes Segment einzeln eine geeignete Ausrichtung der leichten Achse aufgeprägt oder eingeprägt werden kann, ohne dass hierdurch die anderen Segmente beeinflusst werden.

Das Einprägen der Ausrichtung kann bei den einzelnen Segmenten oder auch beim vollständigen Läuferkörper gemäß einer Ausführungsform von außen erfolgen, beispielsweise mittels eines Magnetfelds, das während des Herstellens des Läuferkörpers oder eines Segmentes davon das Material durchdringt. Hierdurch ergibt sich der Vorteil, dass das Anisotropiefeld, das heißt der Verlauf der leichten Achse durch einen entsprechend gewählten Feldverlauf des von außen eingeprägten magnetischen Felds vorgegeben werden kann.

In einer Ausführungsform des Verfahrens wird der Läuferkörper oder werden einzelne Segmente des Läuferkörpers jeweils durch Pressen eines Pulver und/oder eines Granulats, welches jeweils das Material enthält, ausgebildet, wobei gleichzeitig dieses Pulver und/oder Granulat mit einem Magnetfeld beaufschlagt wird. Durch Verwenden eines Pulvers und/oder Granulats kann die Form des Läuferkörpers und/oder eines Segments davon durch eine entsprechende Pressform günstig für die Funktion des Läufers eingestellt werden und gleichzeitig mittels des Magnetfelds beim Pressen die leichte Achse ausgerichtet werden.

Im Folgenden sind bevorzugte Ausführungsformen der Erfindung beschrieben. Hierzu zeigen:
- FIG 1: eine schematische Darstellung einer Ausführungsform der erfindungsgemäßen elektrischen Maschine,
- FIG 2: eine schematische Darstellung eines Querschnitts durch einen Rotor, den die elektrische Maschine von FIG 1 aufweisen kann,
- FIG 3: eine schematische Darstellung eines Querschnitts eines weiteren Rotors, den die elektrische Maschine von FIG 1 aufweisen kann,
- FIG 4: eine schematische Darstellung eines Segments des Rotors von FIG 3 mit einer parallelen Ausrichtung von der leichten Achse einer magnetischen Anisotropie,
- FIG 5: eine schematische Darstellung eines Segments des Rotors mit einer radialen Ausrichtung einer leichten Achse der Anisotropie,
- FIG 6: eine schematische Darstellung eines Segments des Rotors mit einer lateralen Ausrichtung einer leichten Achse einer magnetischen Anisotropie,
- FIG 7: eine schematische Darstellung eines Querschnitts einer Ausführungsform eines erfindungsgemäßen Rotors mit acht Magnetpolen, wie ihn die elektrische Maschine von FIG 1 aufweisen kann.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

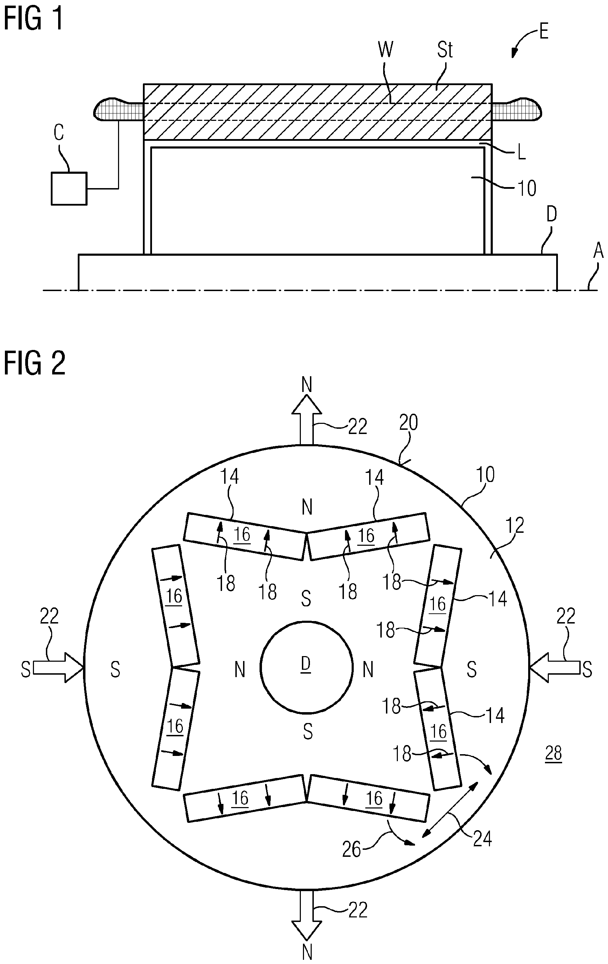

In FIG 1 ist eine elektrische Maschine E im Längsschnitt gezeigt, bei der es sich z.B. um einen Synchronmotor handeln kann. In FIG 1 stellt eine Rotationsachse A auch eine Symmetrieachse der Darstellung dar. Die elektrische Maschine E umfasst einen Stator St, in welchem Wicklungen W elektrischer Spulen angeordnet sind, wobei in FIG 1 nur eine der Wicklungen W dargestellt ist. Die Wicklungen W können durch eine Drehstromquelle C abwechselnd bestromt werden, wodurch im Inneren des Stators St ein magnetisches Drehfeld in einem Luftspalt L der elektrischen Maschine E entsteht. Die Drehstromquelle C kann beispielsweise ein Wechselrichter sein oder ein festfrequentes elektrisches Versorgungsnetz. Die elektrische Maschine E kann auch als Generator ausgestaltet sein, wobei die Drehstromquelle C entfallen oder durch einen Gleichrichter ersetzt sein kann.

Im Inneren des Stators St kann sich ein Rotor 10 befinden, der drehfest mit einer Welle D verbunden sein kann. Die Welle D ist um die Rotationsachse A drehbar in dem Stator St gelagert. Der Rotor 10 kann eine Ausführungsform des erfindungsgemäßen Läufers sein.

In FIG 2 ist der Rotor 10 allein im Querschnitt dargestellt. FIG 2 zeigt von dem Rotor 10 einen Läuferkörper 12, in dem Magnettaschen 14 ausgebildet sind. Der Übersichtlichkeit halber sind nur einige der Magnettaschen 14 mit einem Bezugszeichen versehen. Die Magnettaschen 14 können beispielsweise als Schächte ausgebildet sein, deren Längsachse parallel zur Rotationsachse A, das heißt parallel zur Längserstreckung der Welle D, ausgerichtet ist.

In den Magnettaschen 14 kann jeweils ein Permanentmagnet 16 angeordnet sein. Der Übersichtlichkeit halber sind wieder nur einige Permanentmagneten 16 mit einem Bezugszeichen versehen. Der Permanentmagnet 16 kann eine Magnetisierung mit einer Magnetisierungsrichtung 18 aufweisen, die in FIG 2 und auch in den weiteren Figuren jeweils durch einen Richtungspfeil veranschaulicht ist. Es sind wieder nur einige Magnetisierungsrichtungen 18 mit einem Bezugszeichen versehen. Durch die Magnetisierungsrichtungen 18 ergeben sich jeweils an den Permanentmagneten 16 Nordpole N und Südpole S. Durch das aus den Permanentmagneten 16 austretende Magnetfeld, das den Läuferkörper 12 durchdringt, entstehen an einer Läuferoberfläche 20 Magnetpole 22, die wieder gemäß den unter der Läuferoberfläche 20 angeordneten Permanentmagneten 16 Nordpole N oder Südpole S sind. In FIG 2 ist veranschaulicht, wie durch einen Streufluss 24 innerhalb des Läuferkörpers 12 ein aus einem Permanentmagneten 16 austretender magnetischer Fluss 26 als Streufluss 24 in einen benachbarten Permanentmagneten 16 eintreten oder zu diesem gelangen kann, ohne in eine Umgebung 28 des Läufers 10, das heißt in den Luftspalt L, zu gelangen.

Bei dem Rotor 10 ist der Streufluss 24 aber besonders gering, so dass er die Effizienz der elektrischen Maschine E nicht signifikant beeinträchtigt. Hierzu sind auch keine Flusssperren in dem Rotor 10 nötig, welche durch Hohlräume die mechanische Stabilität des Rotors 10 beeinträchtigen könnten.

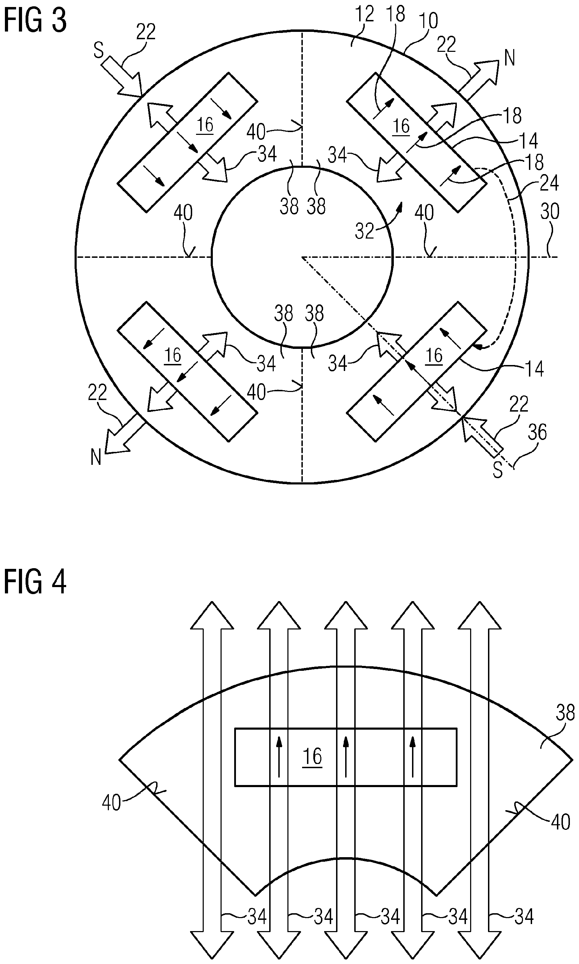

Hierzu ist im Folgenden anhand von FIG 3 bis FIG 7 erläutert, wie der Streufluss 24 reduziert werden kann.

In FIG 3 ist eine weitere Ausführungsform des erfindungsgemäßen Läufers als Rotor 10 dargestellt, welcher dieselbe Funktionalität wie der Läufer 10 von FIG 2 aufweisen kann. Aufgrund der Funktionsgleichheit sind dieselben Bezugszeichen vergeben. Auch weitere Elemente, die funktionsgleich zu Elementen in FIG 2 sind, sind in FIG 3 bis FIG 7 mit denselben Bezugszeichen wie in FIG 2 versehen. Der Rotor 10 in FIG 3 weist pro Magnetpol 22 im Querschnitt lediglich einen Permanentmagneten 16 auf, wobei der Rotor 10 der FIG 2 zwei Permanentmagneten 16 pro Magnetpol 22 aufweist. Die folgenden Ausführungen zu FIG 3 gelten aber auch für den in FIG 2 dargestellten Rotor 10.

Um bei dem Rotor 10 einen Übertritt des magnetischen Flusses eines Permanentmagneten 16 quer zu einer q-Achse 30 innerhalb des Läuferkörpers 12 zu verringern oder zu unterdrücken, weist der Läuferkörper 18 ein Material 32 mit einer magnetischen Anisotropie auf. Insbesondere und bevorzugt ist die magnetische Anisotropie derart ausgebildet, dass eine einzelne leichte Achse 34 und eine senkrecht dazu ausgerichtete einzelne schwere Achse ausgebildet ist.

In FIG 3 ist eine Erstreckungsrichtung oder Verlaufsrichtung der leichten Achse 34 durch einen jeweiligen Doppelpfeil veranschaulicht. Die leichte Achse 34 ist dabei im Bereich der Magnettaschen 14 bevorzugt parallel zu der Magnetisierungsrichtung 18 ausgerichtet, wie es in FIG 3 veranschaulicht ist. Insbesondere im Bereich der Magnettaschen 14 entlang einer d-Achse 36 ist die parallele Ausrichtung zur Magnetisierung 18 vorgesehen.

Um bei dem Rotor 10 die sich entlang des Umfangs des Rotors ergebenden unterschiedlichen Ausrichtungen der leichten Achse 34 zu ermöglichen, kann der Rotor 10 aus Segmenten 38 gebildet sein. Der Rotor 10 kann dann aus anisotropem weichmagnetischem Material 32 gebildet sein, das in die Segmente 38 mit der Anzahl 2p aufgeteilt ist, wobei p die Polpaarzahl ist. Bei den in FIG 3 gezeigten vier Polen ergeben sich somit vier Segmente 38. Die Segmente 38 sind abwechselnd in Nordpole N und Südpole S aufgeteilt. In jedem magnetischen Segment 38 sind die Schlitze der Magnettaschen 14 für die Permanentmagneten 16 vorhanden. Der Läuferkörper 12 kann aus den Segmenten 38 entweder durch stoffflüssiges Verbinden der Segmente 38 erzeugt worden sein. Dabei kann die Ausrichtung der leichten Achse 34 während der Herstellung des gesamten Läuferkörpers 12 oder auch während der Herstellung der einzelnen Segmente 38 eingeprägt worden sein. Der Stoffschluss kann z.B. durch Kleben, Sintern und/oder Löten erreicht sein.

Das Material 32 ist bevorzugt charakterisiert durch die folgenden Werte für die relative Permeabilität: Entlang der leichten Achse 34 weist es einen Wert von bevorzugt größer als 15, insbesondere größer als 20 auf. Entlang der senkrecht dazu ausgerichteten schweren Achse (nicht dargestellt) weist die relative Permeabilität bevorzugt einen Wert von kleiner als zwei, insbesondere kleiner als 1,6 auf. Die Sättigungsflussdichte beträgt bevorzugt mehr als 0,8 Tesla, insbesondere mehr als ein Tesla.

An Berührungsflächen 40 der Segmente 38 kann die Ausrichtung der leichten Achse 34 des anisotropen Materials 32 unterschiedlich eingestellt sein. Hierzu ist im Folgenden auf FIG 4, FIG 5 und FIG 6 verwiesen.

In FIG 4, FIG 5 und FIG 6 ist jeweils ein einzelnes Segment 38 dargestellt. In FIG 4 ist die Ausrichtung der leichten Achse 34 über das ganze Segment 38 parallel. Dies macht die Herstellung eines einzelnen Segments besonders einfach und damit kostengünstig.

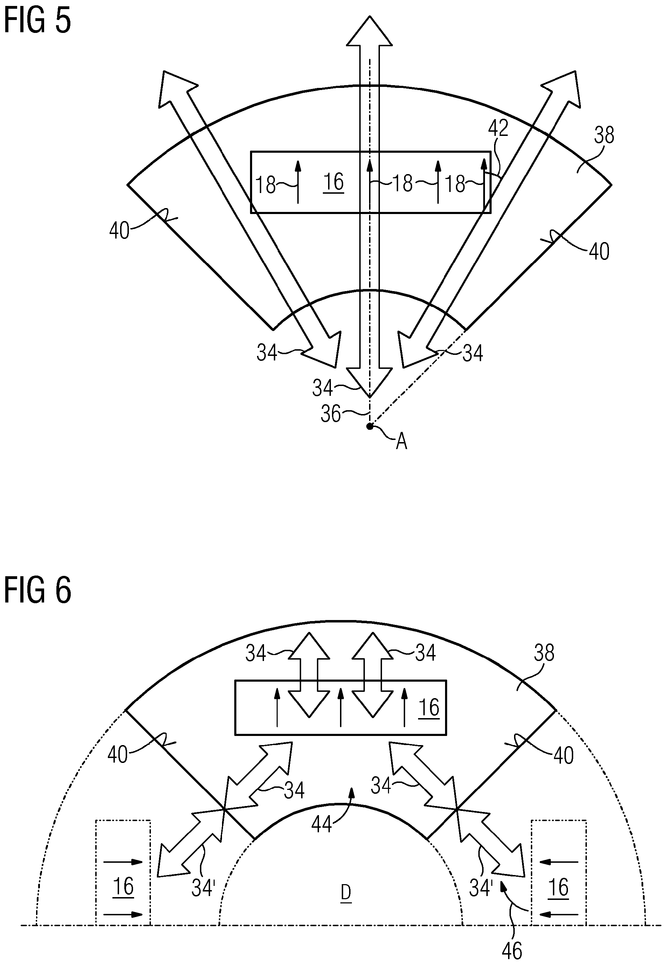

In FIG 5 ist bei dem Segment 38 die Ausrichtung der leichten Achse 34 radial in Bezug auf die Rotationsachse A. Die parallele Ausrichtung der leichten Achse 34 zur Magnetisierung 18 ergibt sich hierbei entlang der d-Achse 36. Im Randbereich des Permanentmagneten 16 weisen die Magnetisierung 18 und die leichte Achse 34 einen Winkel 42 auf, der bevorzugt kleiner als 25 Grad ist. In FIG 6 ist in einem bezüglich des Permanentmagneten 16 radial innenliegenden Bereich 44 die leichte Achse 34 parallel zu einer leichten Achse 34' des jeweils benachbarten Segments ausgerichtet. An den Grenzflächen 40 sind die aufeinanderstoßenden leichten Achsen 34, 34' parallel zueinander ausgerichtet. Hierdurch kann sich der magnetische Kreis 46 im radial innenliegenden Bereich 44 besonders einfach schließen, so dass ein Streufluss im Bereich der Welle D reduziert ist. Die leichten Achsen 34, 34' sind im radial innenliegenden Bereich 44 also lateral ausgerichtet.

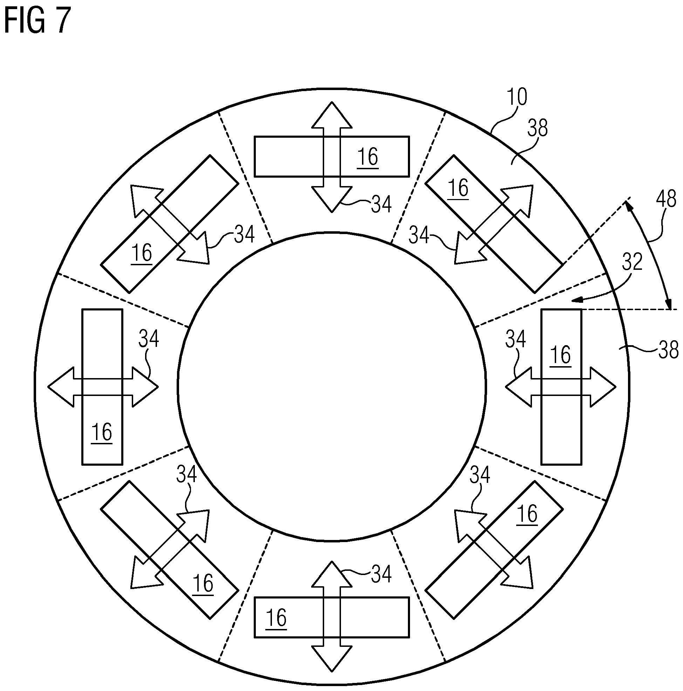

In FIG 7 ist ein Rotor 10 mit acht Magnetpolen, das heißt mit einer Polpaarzahl p gleich vier, im Querschnitt dargestellt. Die Permanentmagneten 16 sind bei dieser Anordnung verhältnismäßig nahe beieinander angeordnet. Mit anderen Worten ist eine jeweilige Pollücke 48 zwischen benachbarten Segmenten 38 geringer ausbildbar, als bei einem herkömmlichen permanentmagneterregten Rotor. Grund dafür ist, dass im Bereich der Pollücke 48 zwischen dem Permanentmagneten 16 keine Flusssperre in Form eines Hohlraumes bereitgestellt sein muss. Es kann das anisotrope Material 32 dort angeordnet sein, so dass der Rotor 10 auch bei einer Polzahl acht mechanisch stabil ausgestaltet bleibt.

Bei dem gezeigten Ausführungsbeispiel sind die Vorteile eines IPM-Aufbaus mit den Vorteilen eines massiven Läuferkörpers 12, also eines Läuferkörpers ohne Hohlräume als Flusssperren, kombiniert. Zudem ergibt sich entlang der q-Achsen 30, das heißt in den Pollücken 48, eine geringe Induktivität. Damit ist ein geringer Spannungsabfall an der q-Induktivität gegeben, was wiederum eine hohe Maximalleistung ermöglicht. Außerdem ist die Verzögerungszeit beim Stromaufbau im Stator St gering, was eine hohe Regeldynamik der elektrischen Maschine E ermöglicht.

Zum Herstellen des Läuferkörpers 12 oder eines einzelnen Segments 38 kann beispielsweise auf ein Pulver oder Granulat zurückgegriffen werden, das eine Legierung mit Neodym-Eisen-Bor (NdFeB) aufweist, wobei bei dieser Legierung in an sich bekannter Weise eine Koerzitivfeldstärke in einem Bereich zwischen zehn und tausend, insbesondere in einem Bereich zwischen 50 und 500 Ampere pro Zentimeter eingestellt ist. Bevorzugt ist eine Remanenz im Bereich zwischen null und zwei, insbesondere in einem Bereich zwischen null und 1,5 Tesla eingestellt.

Das Pulver kann in die Form des Läuferkörpers 12 oder in die Form eines einzelnen Segments 38 gepresst werden. Hierbei kann das Pulver mit einem Magnetfeld beaufschlagt werden, das beispielsweise mittels einer Magnetspule erzeugt werden kann. Durch das Magnetfeld wird beim Pressen des Pulvers und/oder Granulats die Ausrichtung der leichten Achse 34 festgelegt. Danach kann das gepresste Pulver und/oder Granulat beispielsweise durch Sintern verfestigt werden.

Insgesamt ist durch die Bespiele gezeigt, wie durch die Erfindung eine Permanentmagnetmaschine mit innenliegenden Magneten und mit geringer Ankerrückwirkung durch anisotropes weichmagnetisches Material bereitgestellt werden kann.

## Patentansprüche

1. Permanenterregter Läufer (10) für eine elektrische Maschine (E), aufweisend:
- mehrere Permanentmagneten (16) mit einer Magnetisierung zum Erzeugen eines Magnetfelds, und
- einen Läuferkörper (12) mit innen liegenden Magnettaschen (14), in welchen jeweils einer der Permanentmagneten (16) angeordnet ist, wobei der Läuferköper (12) dazu ausgelegt ist, das Magnetfeld zwischen den Magnettaschen (14) und an einer Läuferoberfläche (20) ausgebildeten Magnetpolen (22) des Läufers (10) zu führen,
wobei zum Führen des Magnetfelds jede Magnettasche (14) jeweils in einem Material (32) ausgebildet ist, das zumindest bereichsweise eine magnetische Anisotropie mit einer leichten Achse (34) und einer schweren Achse der Magnetisierbarkeit aufweist, und die leichte Achse (34) parallel oder zumindest in einem Winkel (42) von weniger als 25° zu einer Magnetisierungsrichtung (18) der Magnetisierung des in der Magnettasche (14) angeordneten Permanentmagneten (16) ausgerichtet ist, **dadurch gekennzeichnet, dass** der Läuferkörper (12) aus mehreren Segmenten (38) gebildet ist und bei jedem Segment (38) die Ausrichtung der jeweiligen leichten Achse (34) separat von den übrigen Segmenten (38) ausgebildet ist, wobei an einer Berührfläche (40) zweier der Segmente (38) die leichten Achsen (34,34') der beiden Segmente (38) parallel oder zumindest in einem Winkel von weniger als 25° zueinander und derart tangential oder lateral angeordnet sind, dass im radial innenliegenden Bereich des Läufers ein magnetischer Kreis geschlossen wird, so dass ein Streufluss im Bereich der Welle (D) reduziert wird.

2. Läufer (10) nach Anspruch 1, wobei der Läufer (10) als Rotor (10) für eine Rotationsmaschine (E) ausgestaltet ist.

3. Läufer (10) nach Anspruch 2, wobei bei jeder Magnettasche (14) jeweils zumindest in einem an die Magnettasche (14) angrenzenden Randbereich die leichte Achse (34) in radialer Richtung ausgerichtet ist.

4. Läufer (10) nach einem der vorhergehenden Ansprüche, wobei zwischen benachbarten Magnettaschen (14) durchgängig das Material (32) angeordnet ist.

5. Läufer (10) nach einem der vorhergehenden Ansprüche, wobei eine Anzahl der Magnetpole (22) 4 oder 6 oder 8 oder mehr als 8 beträgt.

6. Läufer (10) nach einem der vorhergehenden Ansprüche, wobei eine relative magnetische Permeabilität des Materials (32) entlang der leichten Achse (34) einen Wert größer als 15, insbesondere größer als 20, und entlang der schweren Achse einen Wert kleiner als 2, insbesondere kleiner als 1,6, aufweist.

7. Läufer (10) nach einem der vorhergehenden Ansprüche, wobei eine magnetische Sättigung des Materials (32) bei einer Flussdichte von mehr als 0,8 Tesla, insbesondere bei mindestens 1,0 Tesla, liegt.

8. Läufer (10) nach einem der vorhergehenden Ansprüche, wobei das Material (32) Neodym-Eisen-Bor, NdFeB, aufweist.

9. Elektrische Maschine (E) mit einem Stator (St) mit Magnetspulen (W), **dadurch gekennzeichnet, dass** die Maschine (E) einen Läufer (10) nach einem der vorhergehenden Ansprüche aufweist.

## Claims

1. Permanent-field armature (10) for an electrical machine (E), having:
- a number of permanent magnets (16) with a magnetisation for creating a magnetic field, and
- an armature body (12) with internal magnet pockets (14), in which in each case one of the permanent magnets (16) is disposed, wherein the armature body (12) is designed to guide the magnetic field between the magnet pockets (14) and magnetic poles (22) of the armature (10) embodied on an armature surface (20),
wherein, to guide the magnetic field, each magnet pocket (14) is embodied in a material (32) in each case which at least in some areas has a magnetic anisotropy with an easy axis (34) and a difficult axis of the magnetisability and the easy axis (34) is aligned in parallel or at least at an angle (42) of less than 25° to a magnetisation direction (18) of the magnetisation of the permanent magnet (16) disposed in the magnet pocket (14),
**characterised in that**
the armature body (12) is formed from a number of segments (38) and with each segment (38) the alignment of the respective easy axis (34) is embodied separately from the other segments (38), wherein at a contact surface (40) between two of the segments (38), the easy axes (34, 34') of the two segments (38) are disposed in parallel or at least at an angle of less than 25° to one another and are thus disposed tangentially or laterally, **in that** a magnetic circuit is closed in the radially interior area of the armature, so that a leakage flux in the area of the shaft (D) is reduced.

2. Armature (10) according to claim 1, wherein the armature (10) is embodied as a rotor (10) for a rotation machine (E).

3. Armature (10) according to claim 2, wherein for each magnet pocket (14) in each case, at least in an edge area adjoining the magnet pocket (14), the easy axis (34) is aligned in the radial direction.

4. Armature (10) according to one of the preceding claims, wherein the material (32) is arranged contiguously between neighbouring magnet pockets (14).

5. Armature (10) according to one of the preceding claims, wherein the number of magnetic poles (22) amounts to 4 or 6 or 8 or more than 8.

6. Armature (10) according to one of the preceding claims, wherein a relative magnetic permeability of the material (32) along the easy axis (34) has a value of greater than 15, especially greater than 20, and along a difficult axis has a value of less than 2, especially less than 1.6.

7. Armature (10) according to one of the preceding claims, wherein a magnetic saturation of the material (32) lies at a flux density of more than 0.8 Tesla, especially at at least 1.0 Tesla.

8. Armature (10) according to one of the preceding claims, wherein the material (32) is neodymium-iron-boron, NdFeB.

9. Electrical machine (E) with a stator (St) with magnetic coils (W), **characterised in that** the machine (E) has an armature (10) according to one of the preceding claims.

## Revendications

1. Induit (10) à excitation permanente pour une machine (E) électrique comportant :
- plusieurs aimants (16) permanents ayant une aimantation pour produire un champ magnétique et
- un corps (12) d'induit ayant des poches (14) pour aimants, qui se trouvent à l'intérieur et dans lesquelles est disposé respectivement l'un des aimants (16) permanents, le corps (12) d'induit étant conçu pour conduire le champ magnétique entre les poches (14) pour aimants et des pôles (22) magnétiques de l'induit (10), constitués sur une surface (20) de l'induit,
dans lequel, pour conduire le champ magnétique, chaque poche (14) pour aimant est en un matériau (32), qui a au moins par endroit une anisotropie magnétique ayant un axe (34) léger et un axe lourd de l'aptitude à l'aimantation, et l'axe (34) léger est dirigé parallèlement, ou au moins en faisant un angle (42) de moins de 25° avec la direction (18) de l'aimantation de l'aimant (16) permanent disposé dans la poche (14) pour aimant,
**caractérisé en ce que**
le corps (12) de l'induit est formé de plusieurs segments (38) et, pour chaque segment (38), l'orientation de l'axe (34) léger est constituée séparément des autres segments (38), dans lequel, sur une surface (40) de contact de deux des segments (38), les axes (34, 34') légers des deux segments (38) sont disposés parallèlement ou au moins en faisant un angle de moins de 25° entre eux, et tangentiellement ou latéralement, de manière à fermer un circuit magnétique dans la région se trouvant vers l'intérieur radialement de l'induit, de façon à réduire un flux de dispersion dans la région de l'arbre (D).

2. Induit (10) suivant la revendication 1, dans lequel l'induit (10) est constitué sous la forme d'un rotor (10) pour une machine (E) tournante.

3. Induit (10) suivant la revendication 2, dans lequel, pour chaque poche (14) pour aimant, respectivement au moins dans une région marginale voisine de la poche (14) pour aimant, l'axe (34) léger est dirigé dans la direction radiale.

4. Induit (10) suivant l'une des revendications précédentes, dans lequel la matière (32) est disposée d'une manière continue entre des poches (14) pour aimants voisines.

5. Induit (10) suivant l'une des revendications précédentes, dans lequel le nombre des pôles (22) magnétiques est de 4 ou 6 ou 8 ou de plus de 8.

6. Induit (10) suivant l'une des revendications précédentes, dans lequel une perméabilité magnétique relative de la matière (32), le long de l'axe (34) léger, a une valeur plus grande que 15, notamment plus grande que 20, et le long de l'axe lourd, une valeur plus petite que 2, notamment plus petite que 1,6.

7. Induit (10) suivant l'une des revendications précédentes, dans lequel une saturation magnétique de la matière (32) est à une densité de flux de plus de 0,8 tesla, notamment d'au moins 1,0 tesla.

8. Induit (10) suivant l'une des revendications précédentes, dans lequel la matière (32) a du néodyme-fer-bore, NdFeB.

9. Machine (E) électrique comprenant un stator (St) ayant des bobines (W) magnétiques, **caractérisée en ce que** la machine (E) a un induit (10) suivant l'une des revendications précédentes.
